Europäisches Patentamt

European Patent Office

Office européen des brevets

(11) Publication number: **0 522 174 A1**

## EUROPEAN PATENT APPLICATION
## published in accordance with Art. 158(3) EPC

(21) Application number: 92903716.6

(22) Date of filing: 28.01.92

(86) International application number: PCT/JP92/00078

(87) International publication number: WO 92/13913 (20.08.92 92/22)

(51) Int. Cl.5: **C08J 3/20**

(30) Priority: 30.01.91 JP 9784/91

(43) Date of publication of application: 13.01.93 Bulletin 93/02

(84) Designated Contracting States: AT BE CH DE DK ES FR GB GR IT LI LU MC NL SE

(71) Applicant: POLYPLASTICS CO. LTD. 3-13, Azuchimachi, 2-chome, Chuo-ku Osaka-shi, Osaka 541(JP)

(72) Inventor: SERIZAWA, Hajime 21-4, Sankeidai Mishima-shi, Shizuoka 411(JP)

Inventor: TAJIMA, Yoshihisa 687-1, Umegaya Shimizu-shi, Shizuoka 424(JP)
Inventor: MIYAWAKI, Keiichi 885-11, Miyajima Fuji-shi, Shizuoka 416(JP)
Inventor: SANO, Hiroyuki 885-11, Miyajima Fuji-shi, Shizuoka 416(JP)

(74) Representative: Tebbit, Antony Hugh Edward HYDE, HEIDE & O'DONNELL 10-12 Priests Bridge London SW15 5JE(GB)

(54) STRUCTURE OF POLYOLEFIN-BASE RESIN COMPOSITION AND PRODUCTION THEREOF.

(57) A molded article of a polyolefin-base resin composition comprising a polyolefin resin and a thermoplastic polyester resin added thereto to form a network structure wherein both resins are dispersed in each other, said molded article retaining excellent characteristics of the polyolefin resin and being improved in otherwise poor thermal resistance and mechanical properties thereof. In the step of melt mixing the polyolefin resin A as a matrix with the thermoplastic polyester resin B, a filler C having a surface tension greater than that of the component B at the melt mixing temperature and a mean particle diameter of 0.05 to 50 $\mu$m is added in such an amount as to satisfy the relation represented by equations (1): $B/(A + B) = 0.05\text{-}0.5$ (by weight) and (2): $C/(B + C) = 0.1\text{-}0.7$ (by weight).

Figure 2

Rank Xerox (UK) Business Services

[Field of Industrial Application]

The present invention relates to a structure comprising a polyolefin resin as the matrix and a thermoplastic polyester resin dispersed therein to form a network and a process for producing it. The present invention provides a resin molding which retains excellent properties of the polyolefin resin, has improved thermal resistance and mechanical properties, and is produced by a simple method at a low cost.

[Prior Art]

Polyolefin resins are used as the general-purpose resin in a large amount in various fields, since they are inexpensive and generally light in weight and have a relatively high chemical resistance and the mechanical properties of them can be varied over a wide range.

However, the polyolefin resins generally have defects that they have a low thermal deformation temperature owing to the low glass transition temperature or melting point thereof and they have a high flexibility and a low modulus of elasticity. Therefore, problems are posed when they are used in the fields of electric and electronic components and automobile parts in which high thermal resistance and rigidity are necessitated, though they are excellent in chemical resistance and some of the mechanical properties. Although the thermal resistance and rigidity (modulus of elasticity) can be improved generally by the incorporation of a filler such as an inorganic fibrous filler or platy filler, the incorporation of a large amount of the filler is necessitated for improving the thermal resistance and the incorporation of such a large amount of the filler increases the specific gravity of the starting material, which hinders weight reduction which is the purpose of using the polyolefin resin. In addition, the melt viscosity of the resin composition is increased to cause troubles in the step of molding by, for example, injection molding. Although it is possible to incorporate a heat-resistant resin having high modulus of elasticity, glass transition temperature and melting point, such as a thermoplastic polyester resin, thereinto, also this method has a defect that a large amount of such a resin is necessitated for improving the thermal resistance and, as a result, the characteristic properties of the polyolefin resin are impaired. Under these circumstances, it has been demanded to develop a process for improving the thermal resistance and modulus of elasticity of the polyolefin resin by the incorporation of only a small amount of an additive. The incorporation of a relatively small amount of the thermoplastic polyester resin is insufficient for improving the thermal resistance, etc., since the resin component is usually in the form of separate particles or layers in the resulting dispersion.

An object of the present invention is to improve the dispersion state obtained when a relatively small amount of a thermoplastic polyester resin is incorporated into a polyolefin resin to thereby remarkably improve the mechanical properties such as thermal resistance and modulus of elasticity while retaining the characteristic properties of the polyolefin resin.

[Disclosure of the invention]

After intensive investigations on the control of the dispersion state of a polymer blend comprising a polyolefin resin and a relatively small amount of a thermoplastic polyester resin made for the purpose of solving the above-described problems, the inventors have found that a structure of a composition comprising the thermoplastic polyester resin dispersed in the polyolefin resin to form a network is obtained by using a specified filler and regulating the relative surface tensions of the components in the melt-kneading step and that the network structure thus formed exhibits remarkably improved thermal resistance and rigidity while substantially retaining the essential properties of the polyolefin resin. The present invention has been completed on the basis of these findings.

Namely, the present invention relates to a process for producing a structure of a composition in which a polyolefin resin A and a thermoplastic polyester resin B interpenetrate into each other to form a dispersion having a network structure, characterized in that in the melt-kneading of the polyolefin resin A as a matrix with the thermoplastic polyester resin B, a filler C having a surface tension which is higher than that of the component B at the melt-kneading temperature and an average particle diameter of 0.05 to 50 $\mu$m is melt-kneaded in amounts satisfying the following formulae (1) and (2), and a molding comprising the structure of the composition obtained by this process:

$B/(A + B) = 0.05$ to $0.5$ (weight ratio)     (1)

$C/(B + C) = 0.1$ to $0.7$ (weight ratio)     (2).

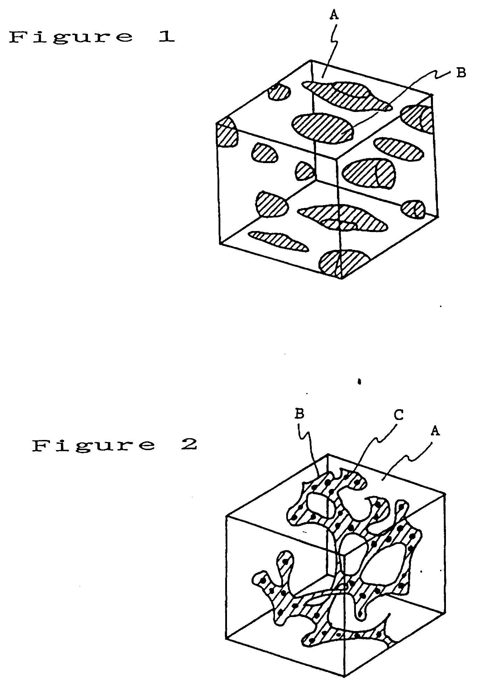

Now description will be made on the dispersion state of the interpenetrating network structure of the present invention. Fig. 1 is a schematic view of the dispersion state of the particles in an ordinary polymer blend, wherein a thermoplastic polyester resin B in an amount smaller than that of a polyolefin resin A as the matrix resin is dispersed in the form of particles. Fig. 2 is a schematic view of the interpenetrating network structure of the present invention, wherein a specified filler C is contained in the thermoplastic polyester resin B, and the polyolefin resin A and the thermoplastic polyester resin B form together a network, i.e. an intertwined structure, which is a continuous phase, though the amount of the thermoplastic polyester resin B contained therein is only small.

Namely, in the present invention, at least part, usually most, of the effective amount of the thermoplastic polyester resin B forms a substantially continuous network structure in the polyolefin resin A. The present invention is characterized by this dispersion state. The improvement in or relating to the thermal resistance, rigidity, etc., by the present invention is far more remarkable than that obtained by the mere incorporation of the thermoplastic polyester resin, though the amount of this resin is relatively small.

Such a dispersion structure can be confirmed by, for example, suitably pulverizing or cutting the pieces of the structure, e.g. a molding, and removing the matrix component A by the dissolution thereof in a suitable solvent. When the component B is dispersed to form the network structure, it remains as it is after the matrix A has been dissolved and thereby removed, while when it is dispersed in the form of particles or layers, its shape is broken beyond recognition. This fact proves the network structure of the present invention. A rough quantitative determination of the network is possible by separating the residue remaining after the dissolution of the matrix with a suitable sieve.

Now description will be made on the components to be used in the present invention.

The polyolefin resins usable as the component A in the present invention include polyethylene, polypropylene, polybutylene, polymethylpentene and the like, and ethylene/propylene copolymer and ethylene/propylene/diene copolymer, and further polymers and copolymers comprising olefin units as the main component. These polyolefin resins can be used either singly or in the form of a mixture of two or more of them.

The thermoplastic polyester resins usable as the component B in the present invention are those obtained by the polycondensation of one or more of dicarboxylic acids such as terephthalic acid, naphthalenedicarboxylic acid, 4,4-diphenyldicarboxylic acid, diphenyl ether dicarboxylic acid, $\alpha,\beta$-bis(4-carboxyphenoxy)ethane, adipic acid, sebacic acid, azelaic acid, decanedicarboxylic acid, dodecanedicarboxylic acid, cyclohexanedicarboxylic acid and dimer acids and ester derivatives of them with one or more of glycols such as ethylene glycol, propylene glycol, butanediol, pentanediol, neopentyl glycol, hexanediol, octanediol, decanediol, cyclohexanedimethanol, hydroquinone, bisphenol A, 2,2-bis(4'-hydroxyethoxyphenyl)propane, xylene glycol, polyethylene glycol, polytetramethylene glycol and aliphatic polyester oligomers having hydroxyl groups at both ends. They may be either homopolyesters or copolyesters.

The comonomers constituting the copolyesters include, in addition to the above-described compounds, hydroxy carboxylic acids such as glycolic acid, hydroxy acids, hydroxybenzoic acid, hydroxyphenoxyacetic acid and naphthylglycolic acid; and lactone compounds such as propiolactone, butyrolactone, caprolactone and valerolactone. They may be also polyesters having a branched or crosslinked structure formed by using a polyfunctional ester-forming component such as trimethylolpropane, trimethylolethane, pentaerythritol, trimellitic acid, trimesic acid or pyromellitic acid so far as the thermoplasticity is retained.

The thermoplastic polyester resins also include halogenated polyester copolymers formed from a compound having a halogen substituent bonded to the aromatic nucleus and an ester-forming group, such as dibromoterephthalic acid, tetrabromoterephthalic acid, tetrachloroterephthalic acid, 1,4-dimethyloltetrabromobenzene, tetrabromobisphenol A, and ethylene and propylene oxide adducts of tetrabromobisphenol A.

The thermoplastic polyester resins may be used either singly or in the form of a mixture of two or more of them as the component B.

Examples of particularly preferred thermoplastic polyester resins include polyalkylene terephthalates such as polyethylene terephthalate and polybutylene terephthalate and copolymers mainly comprising them. Particularly preferred comonomer components constituting the copolymers include isophthalic acid, bisphenol A, 2,2-bis($\beta$-hydroxyethoxyphenyl)propane and 2,2-bis($\beta$-hydroxyethoxytetrabromophenyl)-propane.

As for the proportion of the component A to the component B in the present invention, the amount of the component B is 5 to 50, preferably 10 to 40% by weight, based on the sum of the components A and B. When the amount of the component B is insufficient, the intended effect of the present invention, i.e. improvement in the thermal resistance and modulus of elasticity, cannot be obtained and, on the contrary, when it is excessive, the essential properties of the polyolefin resin disappear unfavorably.

The surface tension of the component C must be at least higher than that of the component B at the melt-kneading temperature. Preferably the surface tension of the component C is higher than that of the component B by at least 2 dyn/cm.

The surface tension of each component must be determined at the melt-kneading temperature in the present invention. The surface tension of a thermoplastic resin can be determined by the handing drop method at that temperature which is usually and widely employed. In this method, a tube is vertically stood and the surface tension of the liquid is estimated from the shape and behavior of the drops of the sample put therein and hanging at the edge of the tube. The critical surface tension of the nonmelting component C can be determined by the contact angle method through calculation based on Zisman plot (the details will be described in Examples given below).

The surface tension of the polyolefin resin A is usually lower than that of the thermoplastic polyester resin B at the melt-kneading temperature. The surface tension of the polyolefin resin A at 250°C is about 18 to 28 dyn/cm (for example, that of polyethylene is about 23 dyn/cm and that of polypropylene is about 19 dyn/cm) and that of the thermoplastic polyester resin B is about 30 to 40 dyn/cm (for example, that of polyethylene terephthalate is about 30 dyn/cm and that of polybutylene terephthalate is about 36 dyn/cm). Therefore, the surface tension of the component C must be higher than that of the component B and is preferably as high as possible when they are kneaded at 250°C.

The average particle diameter (or average fiber length) of the filler used as the component C in the form of particles or fiber is preferably 0.05 to 50 $\mu$m. Still preferably, the average particle diameter ranges from 0.1 to 10 $\mu$m. For forming the fine network structure, the smaller the particle diameter, the better the results. The amount of the component C is 10 to 70%, preferably 20 to 60%, based on the sum of the components B and C. When it is insufficient, the effect of the present invention cannot be fully exhibited and, on the contrary, when it is excessive, undesirable effects are exerted on the properties.

The network dispersion form of the present invention is supposedly formed as follows: when the melt-kneading is conducted in the presence of the component C satisfying the above-described conditions, the particles of the component C are selectively enclosed by the component B according to the relative surface tensions of them, then the component B enclosing a large number of the particles of the component C extends to form branches in cooperation with the movement and dispersion of the component C by the kneading and the branches are connected with each other to form the network structure.

The filler as the component C may be an inorganic or organic filler so far as the above-described conditions are satisfied and particularly the surface tension thereof is higher than that of the component B at the melt-kneading temperature. The shape of the filler is not particularly limited and it may be in the form of fiber, particle or plate. The filler may be in any other form depending on the purpose. Examples of the inorganic fillers include inorganic fibrous materials having an average fiber length of 50 $\mu$m or less, such as glass, asbestos, silica, silica/alumina, alumina, zirconia, boron nitride, silicon nitride, boron and potassium titanate fibers; carbon black; graphite; silica; quartz powder; glass beads; milled glass fiber; glass baloons; glass powder; silicates such as calcium silicate, aluminum silicate, kaolin, talc, clay, diatomaceous earth and wollastonite; metal oxides such as iron oxide, titanium oxide, zinc oxide, antimony trioxide and alumina; metal carbonates such as calcium and magnesium carbonates; metal sulfates such as calcium and barium sulfates; ferrite; silicon carbide; silicon nitride; boron nitride; mica; and glass flakes. They are in the form of particle or plate having an average diameter of 50 $\mu$m or less. The component C is suitably selected in due consideration of the surface tension as compared with that of the component B.

Examples of the organic fillers C include heat-resistant thermoplastic resins and thermosetting resins each having a high melting point and satisfying the above-described conditions. Examples of them include aromatic polyamide resins, aromatic polyimide resins, liquid crystalline polymers, melamine resins, phenolic resins and epoxy resins so far as they satisfy the above-described conditions.

These fillers can be used either singly or in combination of two or more of them.

These fillers can be used as the component C after, if necessary, surface-treated with a suitable surface treatment to control the surface tension thereof.

The structure of the polyolefin resin composition of the present invention may contain known additives such as lubricant, slip additive, nucleating agent, dye, pigment, releasing agent, antioxidant, heat stabilizer, weathering (light) stabilizer, reinforcing agent, hydrolytic stabilizer, thermoplastic resin other than the component A or B and filler other than the component C in order to achieve desired properties so far as the object of the invention is not inhibited.

The structure of the composition of the present invention can be produced by various known processes wherein at least the three components A, B and C are molten by heating and kneaded for preferably at least 30 sec. Other components may be incorporated therein together with these three components or separately from them. More specifically, for example, the components A, B and C are homogeneously mixed on a kneading machine such as a tumbler or Henschel mixer and then melt-kneaded on a single-screw or double-screw extruder to form pellets, which are molded or, alternatively, they are directly molded.

The melt-kneading is herein conducted at the melting temperature and at a shear rate of desirably at least 40 sec$^{-1}$, particularly 100 to 500 sec$^{-1}$.

The treatment temperature is higher than the melting temperature of the resin components by 5 to 100°C, particularly desirably by 10 to 60°C. When the temperature is too high, undesirable decomposition and abnormal reactions occur.

The melt kneading time ranges from 30 sec to 15 min, preferably 1 to 10 min.

In the structure of the polyolefin resin composition of the present invention, the thermoplastic polyester resin is dispersed to form a network in the polyolefin resin. This structure can be formed by a simple process and it retains the characteristic properties of the polyolefin resin and has further improved thermal resistances such as heat distortion temperature and mechanical properties such as modulus of elasticity which are superior to those of the ordinary composition (dispersion of separate particles) comprising a mere mixture of the two components. Thus the use thereof in a wider range is expected.

[Brief Description of Drawings]

Fig. 1 is a schematic view of the dispersion state of the structure of an ordinary polymer blend.
Fig. 2 is a schematic view of the dispersion state of the structure of the present invention.

[Examples]

The following Examples will further illustrate the present invention, which by no means limit the invention.

Examples 1 and 2

Polypropylene (A) (Hi-Pol J400; a product of Mitsui Petrochemical Industries, Ltd.), polyethylene terephthalate (B) (Bel-pet EFG-7; a product of Kanebo, Ltd.) and talc (C) having an average particle diameter of 2 or 20 μm (a product of Fuji Talc Kogyo K.K.) each having a surface tension (250°C) as specified in Table 1 were mixed together in a ratio as specified in Table 1 and then melt-kneaded on a 30 mm double-screw extruder at a screw rotation rate of 80 rpm (shear rate: about 100 sec$^{-1}$) while the temperature was kept at 250°C to form pellets. Then test pieces were prepared from the pellets on an injection molding machine and the properties of them were evaluated by methods which will be described below. The results are given in Table 1.

Determination of surface tension

The surface tension of each of the polyolefin resin and thermoplastic polyester resin was determined by the hanging drop method [described on pages 78 and 79 of "Shin-Jikken Kagaku Koza (New Experimental Science Course), Vol. 18, "Kaimen to Colloid (Interface and Colloid)" published by Maruzen Co., Ltd. in 1977] with an automatic surface-tensimeter PD-Z (a product of Kyowa Kaimen Kagaku K.K.) at an atmospheric temperature of 250°C. The surface tension of the polypropylene resin was 19 dyn/cm and that of polyethylene terephthalate was 30 dyn/cm.

The surface tension of the talc particle was determined by determining the critical surface tension and temperature coefficient of a talc ore by the contact angle method [described on pages 93 to 106 of "Shin-Jikken Kagaku Koza (New Experimental Science Course), Vol. 18, "Kaimen to Colloid (Interface and Colloid)" published by Maruzen Co., Ltd. in 1977] with an automatic contact angle meter CA-Z (a product of Kyowa Kaimen Kagaku K.K.). The surface tension of the talc was 62 dyn/cm at 250°C (the same shall apply hereinafter).

Method of confirmation of the network structure

The molding was cut into pieces each having a size of 10 × 10 × 3 mm, put in a xylene solution and treated at 120°C for 12 h to dissolve the polyolefin resin as the matrix resin. The residue was observed with the naked eye and under an optical microscope and an electron microscope to notice the change in shape to thereby examine the shape of the dispersed thermoplastic polyester resin insoluble under those conditions.

When the thermoplastic polyester resin is in the form of dispersed particles as in the ordinary resin, its original shape is not retained but only precipitates of the thermoplastic polyester resin particles are observed without retaining the original shapes of the pieces.

On the contrary, when the thermoplastic polyester resin has the interpenetrating network structure as in the present invention, the pieces of the molding retain their original shapes, which can be confirmed with the naked eye or under an optical microscope. The interpenetrating network structure thus formed can be recognized more clearly by observation under magnification with a scanning electron microscope.

The quantitative determination of the network structure was conducted as follows: after removing the matrix resin A by dissolution as described above, the sample was sieved through a 12-mesh sieve and the residue was weighed. The network structure part remained, though the dispersed particles had passed through the sieve. The residue (% by weight) refers to the weight of the network structure parts (B + C).

Bending strength and modulus of elasticity:

The bending strength and modulus of elasticity were determined according to the method of ASTM D-790.

Heat distortion temperature:

The heat distortion temperature was determined under a load of 18.6 kg according to ASTM D 648.

Comparative Examples 1 to 5

The same procedure as that of the Example 1 was repeated except that the polypropylene A was used singly, the polyethylene terephthalate B was used singly, a combination of the resins A and B free of the filler C was used or a combination of the resins A and B and component C having a particle diameter outside the scope of the present invention was used. The results are given in Table 1.

Examples 3 to 6 and Comparative Examples 6 to 8

The molded pieces were produced in the same manner as that of the Example 1 except that the amounts of the components A, B and C were altered as specified in Table 2. The results are given in Table 2.

Example 7 and Comparative Examples 9 and 10

Molded pieces were prepared and evaluated in the same manner as that of the Example 1 except that talc used as the filler C was replaced with calcium carbonate (a product of Shiraishi Kogyo K.K.; average particle diameter: 1 $\mu$m), silicone rubber particles (R-930 having an average particle diameter: 1 $\mu$m; product of Toray Silicone Co., Ltd.) or acrylic rubber particles (W 529 having an average particle diameter of 0.3 $\mu$m; a product of Mitsubishi Rayon Co., Ltd.). The results are given in Table 3.

Examples 8 to 12 and Comparative Examples 11 to 15

A composition was prepared, molded and evaluated in the same manner as that of the Example 1 except that the polypropylene used as the component A was replaced with polyethylene (Hi-Zex 2100 JH; a product of Mitsui Petrochemical Industries, Ltd.) or polybutene-1 (Polybutene M 8340; a product of Mitsui Petrochemical Industries, Ltd.), or the polyethylene terephthalate used as the component B was replaced with polybutylene terephthalate (2002; a product of polyplastics Co., Ltd.) each in an amount as specified in Table 4. The results are given in Table 4.

6

Table 1

| | Surface tension | Unit | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|---|
| (A) Polypropylene | 19 | pt. by wt. | 85 | 85 | 100 | 100 | 85 | 85 | — |
| (B) Polyethylene terephthalate | 30 | ditto | 15 | 15 | — | — | 15 | 15 | 100 |
| (C) Talc (2 μm) | 62 | ditto | 5 | — | — | 5 | — | — | — |
| (C) Talc (20 μm) | 62 | ditto | — | 5 | — | — | — | — | — |
| (C) Talc (60 μm) | 62 | ditto | — | — | — | — | — | 5 | — |
| Shape after dissolution in xylene | — | | retained | partially retained | completely dissolved | not retained | not retained | not retained | unchanged |
| Wt. of residue on the sieve after dissolution in xylene | | pt. by wt. (%)* | 17 (85) | 12 (60) | 0 | 0 | 0 | 0 | 100 |
| Heat distortion temp. | | °C | 87 | 82 | 60 | 63 | 65 | 68 | 68 |
| Bending strength | | kg/cm² | 460 | 460 | 360 | 380 | 470 | 460 | 810 |
| Modulus of elasticity | | kg/cm² | 22800 | 21000 | 16500 | 16800 | 16900 | 17200 | 23500 |

* % based on (B) + (C)

Table 2

| | Surface tension | Unit | Ex. 3 | Ex. 4 | Ex. 5 | Ex. 6 | Comp. Ex. 6 | Comp. Ex. 2 | Comp. Ex. 7 | Comp. Ex. 8 |
|---|---|---|---|---|---|---|---|---|---|---|
| (A) Polypropylene 19 | | pt. by wt. | 95 | 95 | 70 | 75 | 95 | 100 | 70 | 70 |
| (B) Polyethylene terephthalate 30 | | ditto | 5 | 5 | 30 | 25 | 5 | — | 30 | 30 |
| (C) Talc (2 μm) 62 | | ditto | 2 | 5 | 10 | 15 | — | 5 | — | 1 |
| Shape after dissolution in xylene | | — | re-tained | re-tained | re-tained | re-tained | not re-tained | not re-tained | not re-tained | not re-tained |
| Wt. of residue on the sieve after dissolution in xylene | | pt. by wt. (%) * | 5 (71) | 6 (60) | 37 (92) | 37 (92) | 0 | 0 | 0 | 0 |
| Heat distortion temp. | | °C | 77 | 78 | 88 | 89 | 61 | 63 | 66 | 66 |
| Bending strength | | kg/cm² | 370 | 380 | 480 | 500 | 370 | 380 | 470 | 480 |
| Modulus of elasticity | | kg/cm² | 18000 | 18600 | 23000 | 23100 | 16600 | 16800 | 18600 | 19000 |

* the same as that of Table 1

Table 3

| | Surface tension | Unit | Ex. 7 | Comp. Ex. 9 | Comp. Ex. 10 |
|---|---|---|---|---|---|
| (A) Polypropylene | 19 | pt. by wt. | 85 | 85 | 85 |
| (B) Polyethylene terephthalate | 30 | ditto | 15 | 15 | 15 |
| (C) Calcium carbonate (1 μm) | 64 | ditto | 5 | — | — |
| (C) Silicone rubber particles (1 μm) | 10 | ditto | — | 5 | — |
| (C) Acrylic rubber particles (0.3 μm) | 26 | ditto | — | — | 5 |
| Shape after dissolution in xylene | | — | retained | not retained | not retained |
| Wt. of residue on the sieve after dissolution in xylene | | pt. by wt. (%)* | 18 (90) | 0 | 0 |
| Heat distortion temp. | | °C | 85 | 62 | 63 |
| Bending strength | | kg/cm² | 450 | 365 | 370 |
| Modulus of elasticity | | kg/cm² | 22300 | 16600 | 16700 |

* the same as that of Table 1

Table 4

| | Surface tension | Unit | Ex. 8 | Ex. 9 | Ex. 10 | Ex. 11 | Ex. 12 | Comp. Ex. 11 | Comp. Ex. 12 | Comp. Ex. 13 | Comp. Ex. 14 | Comp. Ex. 15 |
|---|---|---|---|---|---|---|---|---|---|---|---|---|
| (A) Polypropylene | 19 | pt. by wt. | 85 | – | – | – | – | 85 | – | – | – | – |
| (A) Polyethylene | 23 | ditto | – | 85 | 85 | – | – | – | 85 | 85 | – | – |
| (A) Polybutene-1 | 28 | ditto | – | – | – | 85 | 85 | – | – | – | 85 | 85 |
| (B) Polyethylene terephthalate | 30 | ditto | 15 | 15 | 15 | – | – | – | – | – | 15 | 15 |
| (B) Polybutylene terephthalate | 36 | ditto | 15 | – | – | 15 | 15 | 15 | 15 | 15 | – | – |
| (C) Talc (2 μm) | 62 | ditto | 5 | 5 | 5 | 5 | 5 | – | – | – | – | – |
| Shape after dissolution in xylene | | – | re-tained | re-tained | re-tained | re-tained | re-tained | not re-tained | not re-tained | not re-tained | not re-tained | not re-tained |
| Wt. of residue on the sieve after dissolution in xylene | | pt. by wt. (%)* | 18 (90) | 17 (85) | 18 (90) | 17 (85) | 18 (90) | 0 | 0 | 0 | 0 | 0 |
| Heat distortion temp. | | °C | 89 | 68 | 71 | 65 | 73 | 69 | 55 | 59 | 60 | 63 |
| Bending strength | | kg/cm² | 410 | 520 | 560 | 145 | 170 | 420 | 520 | 565 | 150 | 160 |
| Modulus of elasticity | | kg/cm² | 23000 | 14100 | 16800 | 5800 | 6100 | 18000 | 11200 | 14500 | 4500 | 4800 |

* the same as that of Table 1

## Claims

1. A process for producing a structure of a composition in which a polyolefin resin A and a thermoplastic polyester resin B interpenetrate into each other to form a dispersion having a network structure, characterized in that in the melt-kneading of the polyolefin resin A as the matrix with the thermoplastic polyester resin B, a filler C having a surface tension which is higher than that of the component B at the melt-kneading temperature and an average particle diameter of 0.05 to 50 $\mu$m is melt-kneaded in amounts satisfying the following formulae (1) and (2):

B/(A + B) = 0.05 to 0.5 (weight ratio)  (1)

C/(B + C) = 0.1 to 0.7 (weight ratio)  (2).

2. A process for producing a structure of a composition according to Claim 1, wherein the surface tension of the component C at the melt-kneading temperature is higher than that of the component B by at least 2 dyn/cm.

3. A process for producing a structure of a composition according to Claim 1, wherein the polyolefin resin A is a polymer or copolymer mainly comprising olefin units selected from among ethylene, propylene, butylene and methylpentene units.

4. A process for producing a structure of a composition according to Claim 1, wherein the thermoplastic polyester resin B is a polyalkylene terephthalate or a copolymer comprising the same as the main component.

5. A molding comprising the structure of the composition produced by the process set forth in Claim 1.

Figure 1

Figure 2

# INTERNATIONAL SEARCH REPORT

International Application No PCT/JP92/00078

**I. CLASSIFICATION OF SUBJECT MATTER** (if several classification symbols apply, indicate all) 6

According to International Patent Classification (IPC) or to both National Classification and IPC

Int. $Cl^5$  C08J3/20

**II. FIELDS SEARCHED**

| Minimum Documentation Searched 7 | |
|---|---|
| Classification System | Classification Symbols |
| IPC | C08J3/20, C08L23/02-23/24 |

Documentation Searched other than Minimum Documentation
to the Extent that such Documents are Included in the Fields Searched 8

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | JP, A, 50-151243 (Sumitomo Bakelite Co., Ltd.), December 4, 1975 (04. 12. 75), (Family: none) | 1-5 |
| A | JP, A, 53-77238 (Tokuyama Soda Co., Ltd.), July 8, 1978 (08. 07. 78), (Family: none) | 1-5 |
| A | JP, A, 53-108142 (Toray Industries, Inc.), September 20, 1978 (20. 09. 78), (Family: none) | 1-5 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 15, 1992 (15. 04. 92) | May 12, 1992 (12. 05. 92) |
| International Searching Authority | Signature of Authorized Officer |
| Japanese Patent Office | |

Form PCT/ISA 210 (second sheet) (January 1985)